# EUROPEAN PATENT APPLICATION

(11) **EP 4 258 148 A1**
(43) Date of publication of application: **11.10.2023**
(21) Application number: 22167408.8
(22) Date of filing: 08.04.2022
(51) Int. Cl.: G06F 21/62, H03C 5/00, H04B 10/85, H04K 1/02, H04N 5/913, H04N 7/16, H04L 27/10, H04L 27/18

(54) **METHOD AND DEVICE FOR TRANSMITTING DATA IN A SECURE MANNER**

(71) Applicant: Promotel Ltd, London EC1V 2NX (GB)
(72) Inventor: RAWLINGS SMUTS, Nyhl George, London, EC1V 2NX (GB); MARMORSTEIN, Phillip Jacques, London, EC1V 2NX (GB)
(74) Representative: MERH-IP Matias Erny Reichl Hoffmann Patentanwälte PartG mbB

(57) **Abstract**

The present document describes a method (300) for transmitting a data unit (131) from a first processing device (110, 210) to a second processing device (120, 210) in a secure manner. The method (300) comprises: assigning (301), at the first processing device (110, 210), the data unit (131) to an analog signal (132) at a frequency (201) and/or phase, wherein the frequency (201) and/or phase are dependent on a value of the data unit (131); representing (302), at the first processing device (110, 210), the analog signal (132) by a sequence (133) of PCM samples; applying (303), in particular at the first processing device (110, 210), noise to the sequence (133) of PCM samples, thereby providing a sequence (134) of distorted PCM samples; and deriving (304), at the second processing device (120, 210), the value of the data unit (131) from the sequence (134) of distorted PCM samples.

## Description

The present document relates to a method and a corresponding device for transmitting data in a secure manner.

Data transmission is at risk of so-called backdoor attacks. The present document addresses the technical problem of enabling data transmission which is protected from backdoor attacks in a reliable manner. The technical problem is solved by each one of the independent claims. Preferred examples are described in the dependent claims.

According to an aspect, a method for transmitting a data unit from a first processing device (e.g., from a first central processing unit, CPU) to a second processing device (e.g., a second CPU) in a secure manner. The data unit may be a bit with the possible values "0" and "1". The data unit may have been received at the first processing device from an outside communication network, such as the internet. The second processing device may be hidden and/or blocked from the outside communication network. The first and the second processing device may be part of the same electronic device, e.g., the same smartphone or tablet PC. The method may be directed at protecting data transmission using a backdoor attack on the transmission link between the first and the second processing device.

The method comprises assigning, at the first processing device, the data unit to an analog signal at a frequency and/or phase, wherein the frequency and/or phase may be dependent on the value of the data unit. The analog signal may be a (pure and/or single frequency) sinusoidal signal. The data unit may be assigned to the analog signal using an assignment table, wherein the assignment table indicates for different possible values of the data unit different frequencies and/or phases, respectively.

Hence, the data unit may exhibit a set of different possible values (e.g., two, or four, or eight, or sixteen different values). Each value from the set of possible values may be associated with a corresponding frequency from a set of different frequencies (e.g., two, or four, or eight, or sixteen different frequencies), in a one-to-one relationship. The set of different frequencies may be in the range between 1kHz and 100kHz. One of more of the frequencies may be in the audible frequency range. Preferably, one or more non-audible frequencies are used (e.g. in the MHz frequency range). In a preferred example, the set of different frequencies does not comprise frequencies which are integer multiples of one another, thereby enabling a particular secure and reliable data transmission.

Furthermore, the method comprises representing, at the first processing device, the analog signal by a sequence of PCM samples. The sequence of PCM samples may be obtained by sampling the analog signal at a sampling rate which is at least two times the maximum frequency from the set of different frequencies.

In addition, the method comprises applying, in particular at the first processing device, noise to the sequence of PCM samples, thereby providing a sequence of distorted PCM samples. The noise may have an energy which is dependent on the energy of the analog signal and/or of the sequence of PCM samples. By way of example, the ratio between the noise energy and the signal energy may be between 0,1 and 0,5. The noise may be directed at distorting the amplitude and/or the magnitude of the sequence of PCM samples (without impacting the frequency of the underlying analog signal). Hence, structured noise may be inserted which alters only the amplitude and/or the magnitude but not the frequency. The structured noise may be at a lower frequency (than the frequency of the analog signal), wherein the noise shifts the magnitude of the overall signal into a different energy level. On the other hand, the actual frequency preferably stays intact.

Hence, noise may be applied to the sequence of PCM samples, such that the amplitude and/or the magnitude of the sequence of distorted PCM samples is distorted with regards to the amplitude and/or the magnitude of the sequence of PCM samples. Furthermore, noise may be applied to the sequence of PCM samples, such that the frequency of the sequence of PCM samples, in particular the frequency of the analog signal which corresponds to the sequence of PCM samples, remains unchanged. As a result of this, a particularly reliable data transmission may be enabled.

The method may further comprise deriving, at the second processing device, the value of the data unit from the sequence of distorted PCM samples. In particular, the method may comprise analyzing the sequence of distorted PCM samples to determine a reconstructed frequency and/or a reconstructed phase of a reconstructed analog signal. Furthermore, the method may comprise deriving the value of the data unit based on the reconstructed frequency and/or the reconstructed phase, e.g., using an assignment table. The assignment table may indicate different values of the data unit for different reconstructed frequencies and/or reconstructed phases (and may be inverse to the assignment table used for assigning the analog signal to the data unit).

The reconstructed analog signal, in particular the reconstructed frequency and/or the reconstructed phase, may be derived from the sequence of distorted PCM samples using a time-to-frequency transform and/or using a Fast Fourier Transform (FFT). By doing this, the reconstructed frequency and/or the reconstructed phase may be determined in a particularly efficient and precise manner.

The data transmission method may make use of an error correction code, e.g., a Hamming code, for transmitting one or more data units from the first processing device to the second processing device. The to-be-transmitted data may be encoded using an error correction code, thereby providing encoded data. The encoded data may be subdivided into a sequency of one or more data units, wherein each data unit may be transmitted as outlined in the present document. At the second processing device, the one or more received data units may be concatenated into a sequence of one or more received data units, thereby providing the received encoded data. This received encoded data may be decoded using the error correction decoding scheme, thereby recovering the to-be-transmitted data in a particularly reliable manner.

Hence, the method may comprise deriving the data unit from to-be-transmitted data using an error-correction code, in particular a Hamming code. Furthermore, the method may comprise deriving data corresponding to the to-be-transmitted data from the value of the data unit using the error-correction code.

Hence, a data transmission method is described which allows for a reliable protection against backdoor attacks.

The noise may be applied by a noise generator to the sequence of PCM samples. The noise generator may be external to the first and second processing device.

Further disclosed is a system comprising a first processing device, a noise generating device and a second processing device, which are configured to perform the above-mentioned method.

It should be noted that the method described herein can be implemented in software and/or computer readable code on one or more processors, in whole or in part of the method.

According to a further aspect, a software program is described. The software program may be adapted for execution on a processor and for performing the method steps outlined in the present document when carried out on the processor.

According to a further aspect, a computer program product is described. The computer program may comprise executable instructions for performing the method steps outlined in the present document when executed on a computer.

According to another aspect, a first processing device (e.g., a first CPU) configured to send data to a second processing device (e.g., a second CPU) in a secure manner is described. The first processing device is configured to assign the data unit to an analog signal at a frequency and/or phase, wherein the frequency and/or phase are dependent on the value of the data unit. Furthermore, the first processing device is configured to represent the analog signal by a sequence of PCM samples, and apply noise to the sequence of PCM samples to provide a sequence of distorted PCM samples. In addition, the first processing device is configured to send the sequence of distorted PCM samples to the second processing device.

According to further aspect, a second processing device configured to receive data from a first processing device in a secure manner is described. The second processing device is configured to receive a sequence of distorted PCM samples from the first processing device, wherein the sequence of distorted PCM samples is indicative of a sequence of PCM samples that represents an analog signal at a frequency and/or phase, to which noise has been applied. The second processing device may further be configured to analyze the sequence of distorted PCM samples to determine a reconstructed frequency and/or a reconstructed phase of a reconstructed analog signal, and to derive the value of the data unit based on the reconstructed frequency and/or the reconstructed phase.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1 shows an example data communication network;
Fig. 2a illustrates an example analog signal;
Fig. 2b illustrates an example data exchange between processing devices; and
Fig. 3 shows a flow chart of an example method for transferring data between processing devices.

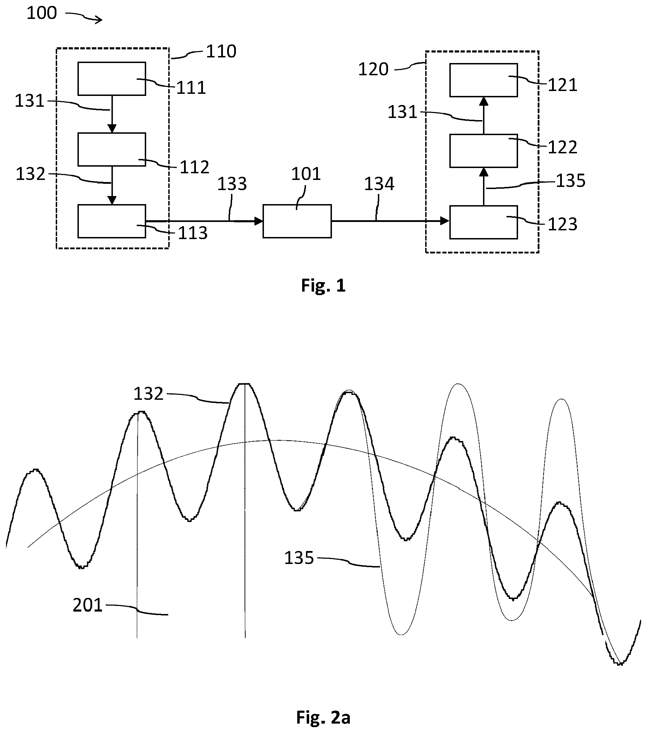

As outlined above, the present document is directed at providing a data transmission scheme which is immune to backdoor attacks. In this context, Fig. 1 shows an example data communication system 100 tor transferring data between a first processing device 110 and a second processing device 120. The first processing device 110 comprises a partitioning unit 111 which is configured to partition a data stream which is to be transmitted into a sequence of data units 131. A data unit 131 may e.g., comprise or may be a bit.

The data unit 131 may be assigned to an analog (sinusoidal) signal 132 (within an assignment unit 112), wherein the analog signal 132 exhibits a frequency and/or a phase. The frequency and/or the phase of the analog signal 132 may be selected in dependence of the value of the data unit 131 which is to be transmitted. By way of example, a data unit 131 with the value "0" may be assigned to an analog signal 132 having a first frequency (e.g., 16 kHz) and a data unit 131 with the value "1" may be assigned to an analog signal 132 having a second frequency (e.g., 24kHz).

Furthermore, the analog signal may be converted into a sequence 133 of PCM (pulse code modulated) samples within a conversion unit 113. The sequence 133 of PCM samples may exhibit a sampling rate which is at least twice the highest possible frequency of the analog signal 132.

Within a noise generation unit 101 (which may be part of the first processing device 110), high and/or low frequency noise may be applied to the sequence 133 of PCM samples, thereby generating a sequence 134 of distorted PCM samples. By distorting the sequence 133 of PCM samples, the data becomes immune to backdoor attacks.

The second processing device 120 may be configured to derive a reconstructed analog (sinusoidal) signal 135 having a reconstructed frequency and/or a reconstructed phase (within a reconstruction unit 123). Furthermore, the reconstructed analog signal 135, notably the reconstructed frequency and/or the reconstructed phase, may be used to determine the value of the data unit 131 (within the decoding unit 122).

The process may be repeated at a certain rate to transmit the sequency of data units 131 from the first processing device 110 to the second processing device 120. The sequency of data units 131 may be assembled to a data stream within the assembling unit 121.

Hence, in the present document a method is described, which ensures that it is impossible to exact structured data 131 from a data communication that is interpreted by a non-trusted hardware and/or software layer. In order to achieve a secure hardware layer, two processors 110, 120 may be used within a single handheld device, one processor 110 may be referred to as the online processor which is connected to a communication network, such as the internet. The second processor 120 may be isolated from the surrounding world (e.g., air locked).

These processors 110, 120 may be linked via a low-level signaling system, which may not require any presiding digital hand shake or other protocol that is controlled by a non-trusted software layer, and without any drivers required to process the data 131. The data 131 may be transferred in single bits using an analogue frequency format. As a result of this, the underlying software cannot interpret the exact data and interfering noise does not directly affect the demodulated binary stream.

Once the analogue data has been received by the application's highest software layer, the data has passed through all the untrusted layers of hardware and software into a trusted software control. By demodulation of the analogue pulse code modulation data 135 (PCM), a byte stream may be reconstructed into precise binary data. This binary data 131 has circumvented all other hardware and software layers and hence cannot invoke any underlying logic, which may reside in the form of a backdoor or any other security exploit.

All exploits in hardware and software require precise circumstances coupled with a precise payload in order to be invoked. Radios may receive and reconstruct the radio waves into binary data which transcends all hardware and software layers. If an intentional backdoor is installed, all that is needed to occur, is to recognize a certain binary sequence, which then maps the data stream into a point in the memory and executes a remote payload. This would be a small and hard to trace backdoor at hard- or software level. Given that it is easy to control, from a remote source, this binary stream will traverse all layers. Therefore, an antivirus or software protection is typically not able to protect the system. Nothing can be done about this, as these backdoors circumvent all security measures implemented. It enables the entities who designed the hardware/software to harvest critical information.

By keeping all sensitive information in a trusted computing environment, it is possible to bypass all backdoors. This may be done by analogue signaling whilst inducing unstructured noise within PCM streams 133 and/or light refraction variations within computer vision technologies. To achieve this, the binary stream may be deeply encoded within a random looking optical or electronical signal. The decoding of said stream 134 is only possible with a sequence of mathematical transformations. The backdoor cannot detect the trigger sequence as the byte stream is distorted. The byte stream is then delivered to a higher-level application, which will rebuild the data stream in isolation. For this purpose, frequency data and PCM streams may be used to communicate with a CPU 120 (central processing device), which otherwise has no connection to the outside world.

Fig. 2a illustrates the variation of absolute electromagnetic energy that can vary, disallowing consistent predictable energy levels which could translate into binary values. This could invoke lower-level backdoors within the operating system. Furthermore, this is compounded with varying amplitude levels to further distort the usability of the raw signal. This methodology increases security in huge strides. In essence, this requires a specific code to demodulate, rather than the traditional 'off by one' backdoors within operating systems.

On a microprocessor, which has a bus of 32 bits running at 2 GHz, the throughput of the raw PCM data 133 may be at about 10 Mhz. However, PCM code typically requires multiple samples to constitute the wave form 132, 135 as depicted in Fig. 2a. Using between 32 and 128 samples per bit transferred leads to a throughput of binary at about 78 Kb/s to 312 Kb/s. This may be sufficient to stream a video in standard resolution.

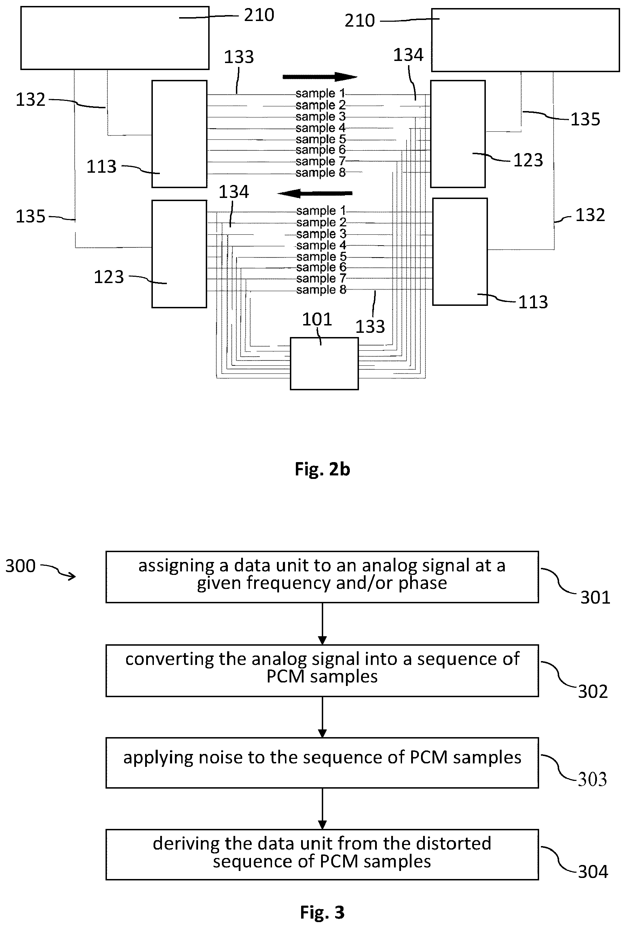

Fig. 2b shows an example hardware implementation. In view of the analogue representation of the PCM signal 133, 134, the hardware implementation may make use of a SPI (Serial Peripheral Interface) connection to a multiplexed DAC chip 113 which may be paired with a multiplexed ADC chip. 123 The configuration may be mirrored for data to flow in the opposite direction.

A barebone driver may transport the PCM data 134 directly to the top-level application and may therefore be interpreted by the least software layers possible. The inline autonomous noise generator 101 may ensure that all PCM data 134 appears as completely scrambled data, as the software layers between the hardware and the highest trusted software application will be unaware of the frequencies 201 used for transmitting the binary bits 131. The size of the code and the fact that it is required to be purpose specific to interpret any meaningful data, make plausibly deniable backdoors impossible. Using this mechanism, 99.99% of rogue code is rendered inoperable. The frequencies 201 embedded within the PCM 133 may change between versions in order to ensure that any hacking attack is unsustainable.

Fig. 3 shows a flow chart of an example method 300 for transmitting a data unit 131 from a first processing device 110, 210 (which may be in contact with an outside communication network, such as the internet) to a second processing device 120, 210 (which may be blocked from the outside communication network) in a secure manner.

The method 300 comprises assigning 301, at the first processing device 110, 210, the data unit 131 to an analog signal 132 at a frequency and/or phase, wherein the frequency 201 and/or phase may be dependent on the value of the data unit 131. Furthermore, the method 300 comprises representing 302, at the first processing device 110, 210, the analog signal 132 by a sequence 133 of PCM samples. In addition, the method 300 comprises applying 303, in particular at the first processing device 110, 210, noise to the sequence 133 of PCM samples, thereby providing a sequence 134 of distorted PCM samples. Furthermore, the method 300 may comprise deriving 304, at the second processing device 120, 210, the value of the data unit 131 from the sequence 134 of distorted PCM samples.

Various modifications to the implementations described in this disclosure may be readily apparent to those having ordinary skill in the art. The general principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein.

## Claims

1. A method (300) for transmitting a data unit (131) from a first processing device (110, 210) to a second processing device (120, 210) in a secure manner, the method (300) comprising
- assigning (301), at the first processing device (110, 210), the data unit (131) to an analog signal (132) at a frequency (201) and/or phase, wherein the frequency (201) and/or phase are dependent on a value of the data unit (131);
- representing (302), at the first processing device (110, 210), the analog signal (132) by a sequence (133) of PCM samples;
- applying (303), in particular at the first processing device (110, 210), noise to the sequence (133) of PCM samples, thereby providing a sequence (134) of distorted PCM samples; and
- deriving (304), at the second processing device (120, 210), the value of the data unit (131) from the sequence (134) of distorted PCM samples.

2. The method (300) according to claim 1, wherein
- the data unit (131) is assigned to the analog signal (132) using an assignment table; and
- the assignment table indicates for different possible values of the data unit (131) different frequencies and/or phases.

3. The method (300) according to any of the previous claims, wherein the data unit (131) is a bit with the possible values "0" and "1".

4. The method (300) according to any of the previous claims, wherein the analog signal is a sinusoidal signal.

5. The method (300) according to any of the previous claims, wherein
- the data unit (131) exhibits a set of different possible values;
- each value from the set of possible values is associated with a corresponding frequency (201) from a set of different frequencies; and
- the sequence (133) of PCM samples is obtained by sampling the analog signal (132) at a sampling rate which is at least two times the maximum frequency from the set of different frequencies.

6. The method (300) according to claim 5, wherein the set of different frequencies does not comprise frequencies which are integer multiples of one another.

7. The method (300) according to any of the previous claims, wherein the method (300) comprises
- analyzing the sequence (134) of distorted PCM samples to determine a reconstructed frequency and/or a reconstructed phase of a reconstructed analog signal (135); and
- deriving (304) the value of the data unit (131) based on the reconstructed frequency and/or the reconstructed phase.

8. The method (300) according to claim 7, wherein the sequence (134) of distorted PCM samples is analyzed using a time-to-frequency-transform, in particular a Fast Fourier Transform, to determine the reconstructed frequency and/or the reconstructed phase of the reconstructed analog signal (135).

9. The method (300) according to any of the previous claims, wherein
- the value of the data unit (131) is derived from the sequence (134) of distorted PCM samples using an assignment table; and
- the assignment table indicates different values of the data unit (131) for different reconstructed frequencies and/or reconstructed phases.

10. The method (300) according to any of the previous claims, wherein
- the method (300) comprises receiving, at the first processing device (110, 210), the data unit (131) from an outside communication network; and
- the second processing device (120, 210) is hidden and/or blocked from the outside communication network.

11. The method (300) according to any of the previous claims, wherein the noise is applied by a noise generator to the sequence (133) of PCM samples, such that.
- an amplitude and/or a magnitude of the sequence (134) of distorted PCM samples is distorted with regards to an amplitude and/or a magnitude of the sequence (133) of PCM samples; and/or
- a frequency of the sequence (133) of PCM samples, in particular the frequency of the analog signal (132) which corresponds to the sequence (133) of PCM samples, remains unchanged.

12. The method (300) according to any of the previous claims, wherein the method (300) comprises,
- deriving the data unit (131) from to-be-transmitted data using an error-correction code, in particular a Hamming code; and
- deriving (304) data corresponding to the to-be-transmitted data from the value of the data unit (131) using the error-correction code.

13. A first processing device (110, 210) configured to send data to a second processing device (120, 210) in a secure manner, wherein the first processing device (110, 210) is configured to
- assign the data unit (131) to an analog signal (132) at a frequency (201) and/or phase, wherein the frequency (201) and/or phase are dependent on a value of the data unit (131);
- represent the analog signal (132) by a sequence (133) of PCM samples;
- apply noise to the sequence (133) of PCM samples to provide a sequence (134) of distorted PCM samples; and
- send the sequence (134) of distorted PCM samples to the second processing device (120, 210).

14. A second processing device (120, 210) configured to receive data from a first processing device (110, 210) in a secure manner, wherein the second processing device (120, 210) is configured to
- receive a sequence (134) of distorted PCM samples from the first processing device (110, 210); wherein the sequence (134) of distorted PCM samples is indicative of a sequence (133) of PCM samples that represents an analog signal at a frequency (201) and/or phase, to which noise has been applied;
- analyze the sequence (134) of distorted PCM samples to determine a reconstructed frequency and/or a reconstructed phase of a reconstructed analog signal (135); and
- derive the value of the data unit (131) based on the reconstructed frequency and/or the reconstructed phase.

15. System for data communication comprising:
a first processing device (110, 210) configured to send data to a second processing device (120, 210), wherein the first processing device (110, 210) is configured to
- assign the data unit (131) to an analog signal (132) at a frequency (201) and/or phase, wherein the frequency (201) and/or phase are dependent on a value of the data unit (131);
- represent the analog signal (132) by a sequence (133) of PCM samples; and
- send the sequence (134) of distorted PCM samples to the second processing device (120, 210);
a noise generating device (101) configured apply noise to the sequence (133) of PCM samples to provide a sequence (134) of distorted PCM samples; and
second processing device (120, 210) configured to receive data from the first processing device (110, 210), wherein the second processing device (120, 210) is configured to
- receive the sequence (134) of distorted PCM samples from the first processing device (110, 210); wherein the sequence (134) of distorted PCM samples is indicative of a sequence (133) of PCM samples that represents an analog signal at a frequency (201) and/or phase, to which noise has been applied;
- analyze the sequence (134) of distorted PCM samples to determine a reconstructed frequency and/or a reconstructed phase of a reconstructed analog signal (135); and
- derive the value of the data unit (131) based on the reconstructed frequency and/or the reconstructed phase.
